# EUROPEAN PATENT APPLICATION

(11) **EP 0 533 382 A1**
(43) Date of publication of application: **24.03.1993**
(21) Application number: 92308064.2
(22) Date of filing: 04.09.1992
(51) Int. Cl.: C04B 41/50, C04B 28/08, B32B 13/14

(54) **Coated insulation board**

(30) Priority: 06.09.1991 FI 914231
(71) Applicant: PAROC OY AB, SF-21600 Pargas (FI)
(72) Inventor: Talling, Bob Lars Olof, SF-20600 Abo (FI)
(74) Representative: Barlow, Roy James

(57) **Abstract**

The invention concerns an insulation board of mineral fibres provided with a coating which contains mineral particles bonded with slag alkali cement and optionally containing short fibres. The invention also concerns a process for the manufacture of such an insulation board an its use.

## Description

The present invention concerns an insulation board of mineral fibres, which is coated so as to provide better resistance to temporary loads, i.e. tread or stepping resistance. The invention concerns also a process for the manufacture of the board and its use.

Mineral fibre boards, of both rock wool and glass wool type, are commonly used for heat and sound insulation of buildings. The board is made by collecting the fibres to which an adhesive has been added, to form a continuous mat of desired fibre structure, density and thickness, curing the mat, usually with heat and pressure, so that the mat with the aid of the binding agent, receives the desired structure, and is thereafter cut to boards of suitable dimensions.

Such boards are almost ideal as an insulation material. They possess a high insulation capacity, they do not absorb moisture and their strength during normal conditions of use is good.

However, in case the board is subjected to repeated spot-like loads, the strength is not sufficient. Such is the case for example in connection with roof work on flat roofs, where the workers walk on top of the insulation. This traffic has a tendency to concentrate to certain places, where the insulation softens and is provided with soft "paths". The roof covering does not attach properly at these places, but the board absorbs an excess of bitumen which in turn reduces the insulation capacity.

This disadvantage is avoided by means of the board according to the invention. It possesses very good tread resistance without a change in the insulation properties or in an unnecessary increase in manufacturing costs. At the same time a smooth surface is provided, onto which the roof covering can be easily attached with less consumption of bitumen. This effect has been achieved by applying to the board a coating which contains mineral particles bound by slag alkali cement.

Slag alkali cement is comprised of finely ground granulated slag, preferably blast furnace slag, the latent hydraulic properties of which are activated with an alkaline agent. Slag alkali cement has, compared to conventional Portland cement, very high and rapidly developing strength properties, high temperature resistance, and low moisture sensitivity. It is insensitive to intensive heat treatment and pressure, which occur during the curing process using conventional curing of the mineral fibre mat. It also withstands curing with radiation, e.g. infra-red or microwave heating. In addition, the raw materials are cheap.

As the binder in the coating, i.e. the slag alkali cement, forms a very durable matrix, the fillers can be of soft minerals, such a serpentinite, dolomite, magnesite or limestone. As the mineral material is soft, larger particle sizes can be used without the coating being difficult to work in cured condition. As a matter of fact, the particle size is mostly limited by the thickness of the coating layer. The diameter should not preferably be bigger than the thickness of the layer, otherwise the surface becomes uneven and makes the application of the roof covering more difficult. A suitable particle size is up to 4 mm, preferably 0.1-2 mm. A large particle size makes the coating porous and air permeable. The coating can thus be applied before the curing of the fibre mat in the curing oven without jeopardizing the curing of the fibre matrix.

As the filler also very finely divided material can be use, such as clay. Then, however the air permeability becomes poorer, and clay can preferably be used when the coating takes place as an after-treatment step.

Advantageously short fibres are added as fillers into the coating. The fibres distribute the pressure load in the coating and gives it toughness. At the same time, they raise the porosity and improve air permeability. Especially advantageous from an overall economical pint of view is to use for this purpose the fibre waste which is left from the mineral fibre production. The amount of fibre, such as rock wool or glass wool fibre, is preferably not more than 30 % by weight of the coating.

As the alkaline agent in the slag alkali cement, preferably water glass is used, especially sodium water glass. The hardening behaviour of the cement can be effected by the mole ratio of the water glass (= the ratio SiO₂/Na₂O). The suitable ratio for this coating is between 0.5-2.8, preferably 0.5-1.8. Water glass is used, calculated as dry substance, appr. 4-20%; preferably 6-12% by weight of the amount of slag.

When using water glass as the activator, another important and surprising advantage is achieved. Slag alkali cement, as compared to ordinary Portland cement, does not have a chemical effect on the mineral fibres, which after even a long contact time with the coating are completely intact. This can be explained by the fact that slag alkali cement does not develop Ca(OH)₂ during the hydration and that water glass provides for a high level of SiO₂ in the mixing water, which prevents more SiO₂ from being extracted from the fibre. Instead the fibre surface is passivated.

A suitable density for the final coating is 1-2 kg/dm³. In this case very good strength results are achieved already with coating weights of 2-10 kg/m². The fact that such good results can be achieved with such small coating weights can be explained by the fact that in the conventional curing process part of the coating is pressed into the fibre matrix and distributes the pressure load over a large fibre surface.

A coating of such small thickness can be rapidly cured, and then the binder contributes up to 50%, preferably 20-30 % of the total weight of the coating. If the coating is made thicker, the cement level can be reduced, preferably not, however, below appr. 10 % of the total weight of the coating. By choosing the components of the cement and their weight ratios, the characteristics and the curing behaviour of the coating can be adjusted according to need.

When manufacturing the insulation board according to the invention, the dry components of the coating are mixed, and water glass and water are added in an amount to make the mixture barely moist. The application takes place in a known location before the curing oven. The fibre mat and the coating are cured together, in a conventional curing oven during rapid application of heat and pressure. During the curing procedure the moisture of the material is distributed evenly in the coating layer and the curing takes place rapidly, without an excess of water. Part of the water is bound into the hydration products of the slag alkali cement.

Finally the mat is cut into boards of suitable size. These can be further processed, for example provided with tongue and grooves, without any interference from the coating.

The coating can, however, also be applied as an after-treatment on an already cured mineral fibre board. Then the coating material can be mixed with more water to a slurry which is applied onto the board. The curing procedure can be varied according to the circumstances. If needed, the curing can also take place at room temperature without the addition of heat.

If pressure is not used during curing, it is advantageous to work the surface of the board prior to casting the slurry so that small holes or apertures are formed in the surface. These give the coating a large adhesion and pressure distribution surface, without the need to increase the mean thickness of the layer.

The strength of the insulation board can be further improved by applying a thin glass fibre web onto the coating before curing which is made to constitute an integral part of the coating.

The following examples illustrate the invention.

### Example 1

The following composition for the coating was used

| | | |
|---|---|---|
| 20 % | by weight | slag |
| 2 | -"- | sodium water glass |
| 30 | -"- | serpentinite |
| 48 | -"- | lime stone. |

In addition, 15 % by weight of fibre waste obtained from the cutting of a mineral wool mat was added. The slag was finely ground (450 m²/kg) blast furnace slag containing 5 % by weight of clinker. The compression strength of the coating without fibres was appr. 70 MPa after 28 days. Water was added in an amount to give a barely coatable slurry. The coating was applied in an amount of 5.5 kg/M² to a raw wool mat for roof use of 120 kg/³. The board was compressed to its final density and curved at 160 °C for 1 hour.

### Example 2

The following composition for the coating was used

| | | |
|---|---|---|
| 30 % | by weight | slag |
| 4 | -"- | sodium water glass |
| 20 | -"- | magnesite |
| 46 | -"- | lime stone. |

In addition 10 % by weight of fibre waste obtained from the cutting of a mineral wool mat, and 8 % weight of glass fibres were added. The slag was finely ground (450 m²/kg) blast furnace slag containing 5 % by weight of clinker. The compression strength of the coating without added fibres was appr. 95 MPa after 28 days. Water was added in an amount so that the mixture could be cast onto a cured roof board of 120 kg/m³ which, before coating, had been treated so that its surface was full of small indentations. The coating was applied in an amount of 6.5 kg/m². Curing took place at 95 °C for 1 hour.

The resistance characteristics of the test boards were compared to those of corresponding uncoated boards.

### Drop test

Onto the board, a metal prism of 2 kg (10x10x5 cm) was dropped from a height of 50 cm with one corner hitting the board. The indentation formed in the uncoated board was on an average 4 cm, whereas the identation formed in the board according to the Example 1 was on a average 1 cm.

### Load test

A load was applied to the board by rolling on top of it a wheel, width 5 cm, diameter 20 cm, the applied load being 100 kg. After rolling the wheel over the board ten times, there was an 1.5 cm deep indentation in the uncoated board. No indentation was visible in the board according to the Example 1.

### Compression test

In this test the loads are measured which are needed to provide an indentation of 5 and 10 %, respectively, in the metarial. In the test, the board according to the Example 2 was used. A force that made a 5 % indentation in the uncoated board did not affect the coated board at all. A force that made a 10 % indentation in the uncoated board, gave rise to beginning cracks in the coating of the coated board.

## Claims

1. Insulation board, preferably mineral fibre board, provided with a coating, **characterized** in that the coating contains mineral particles bound with slag alkali cement.

2. Insulation board according to claim 1, **characterized** in that the mineral particles are soft minerals, such as serpentinite, dolomite, magnesite or lime stone, with a particle size up to 4 mm, preferably 0.1-2 mm.

3. Insulation board according to claim 1 or 2, **characterized** in that the coating weight on the boared is 2-10 kg/m² when the density of the finished coating is 1-2 kg/dm³.

4. Insulation board according to claim 3, **characterized** in that the proportion of slag alkali cement in the coating is at the most 50 % by weight, preferably 20-30 % by weight.

5. Insulation board according to any one of the preceeding claims, **characterized** in that the coating in addition contains short fibres, preferably fibres from the mineral wool production.

6. Insulation board according to any one of the preceeding claims, **characterized** in that the activator in the slag alkali cement is water glass, preferably sodium water glass.

7. Insulation board according to any one of the preceeding claims, **characterized** in that the board, on the coating surface, is provided with a glass fibre web.

8. Use of an insulation board according to any one of the claims 1-7 for the insulation of roofs.

9. Process for the production of an insulation board according to any one of the claims 1-7, **characterized** in that the dry components of the coating are mixed, water and water glass are added in a suitable amount to provide a mass with a degree of moisture suitable for application, the mass obtained is applied to the surface of the mineral board and the coating is cured.

10. Process according to the claim 9, **characterized** in that the dry components are mixed with water and water glass to a stiff mass and the applied coating and the mineral board are cured together in a curing oven under heat and pressure.
